# EUROPEAN PATENT APPLICATION

(11) **EP 4 548 767 A1**
(43) Date of publication of application: **07.05.2025**
(21) Application number: 23916415.5
(22) Date of filing: 06.12.2023
(51) Int. Cl.: A22B 5/00, B25J 11/00, B25J 9/00, B25J 9/16, B25J 13/08

(54) **SLAUGHTER AUTOMATION ROBOT SYSTEM**

(30) Priority: 10.01.2023 KR 20230003560
(71) Applicant: Robos Co.,Ltd, Daegu 43018 (KR)
(72) Inventor: LEE, Du Yeol, Daegu 42761 (KR); PARK, Won Seok, Dalseong-gun, Daegu 43019 (KR)
(74) Representative: Germain Maureau
(86) International application number: PCT/KR2023/019981
(87) International publication number: WO 2024/150932

(57) **Abstract**

One embodiment of the present invention provides an automated slaughter robot system including a scanning module configured to scan a slaughtered animal moving while hanging on a hanger, a work determination module configured to determine whether to cut or dismember the slaughtered animal based on an image provided from the scanning module, a work control module configured to extract a required cutting or dismembering part of the slaughtered animal from the image acquired through the scanning module, and a slaughter robot module configured to cut or dismember the slaughtered animal according to a work command provided from the work control module.

## Description

### [Technical Field]

The present invention relates to an automated slaughter robot system, and more specifically, to an automated slaughter robot system for accurately dismembering or cutting a slaughtered animal using a slaughter robot to obtain a required part.

### [Background Art]

Schematically describing a process of slaughtering animals used for food such as cows or pigs, the process includes processes such as hanging, suffocation, bleeding, depilation, washing, dismembering, cutting, weighing, grading, precooling, etc.

Here, when a slaughtered animal is dismembered or cut, conventionally, a worker visually determines a part of the slaughtered animal to be dismembered or cut and then dismembers or cuts the slaughtered animal using a knife, a saw, or the like to have a required part.

However, when the worker directly dismembers the slaughtered animal in this way, there is a problem that the commercial value of the slaughtered product varies depending on the worker's skill, and the worker may be seriously injured while dismembering the slaughtered animal. Due to such a problem, slaughter robots to be replaced with workers are being developed, and when slaughtering is performed using the slaughter robot, the slaughtering can be performed safely and easily when compared to manual methods.

However, slaughter systems using conventional slaughter robots have problems that a slaughter process can proceed even when a captured image of a slaughtered animal is not clear or the slaughter process cannot proceed because the accuracy of the captured image is too low. In this case, there is a problem that the slaughtered animal cannot be accurately dismembered or cut into the required shape.

Accordingly, there is a need for various research and development for automated slaughter robot systems for accurately dismembering or cutting a slaughtered animal using a robot to obtain a required part.

### [Related Art Document]

### [Patent Document]

(Related Art Document 1) Korean Utility Model Publication No. 20-2017-0002583 (2017.07.17)

### [Disclosure]

### [Technical Problem]

In order to solve the above problems, the present invention is directed to providing an automated slaughter robot system for accurately dismembering or cutting a slaughtered animal using a slaughter robot to obtain a required part.

### [Technical Solution]

In order to achieve the above technical problem, one embodiment of the present invention provides an automated slaughter robot system including a scanning module configured to scan a slaughtered animal moving while hanging on a hanger, a work determination module configured to determine whether to cut or dismember the slaughtered animal based on an image provided from the scanning module, a work control module configured to extract a required cutting or dismembering part of the slaughtered animal from the image acquired through the scanning module, and a slaughter robot module configured to cut or dismember the slaughtered animal according to a work command provided from the work control module.

**In** one embodiment of the present invention, the slaughter robot module may include a first slaughter robot configured to cut a neck part of the slaughtered animal, a second slaughter robot that is disposed adjacent to the first slaughter robot and dismembers an abdomen part of the slaughtered animal, and a third slaughter robot that is disposed adjacent to the second slaughter robot and bisects the slaughtered animal from the neck part to a tail of the slaughtered animal, and the first slaughter robot to the third slaughter robot may cut or dismember the slaughtered animal according to a moving speed of the slaughtered animal moving while hanging on the hanger.

In one embodiment of the present invention, the scanning module may include a first scan unit that is disposed in front of the first slaughter robot and scans the slaughtered animal, a second scan unit that is disposed between the first slaughter robot and the second slaughter robot and scans the slaughtered animal, and a third scan unit that is disposed between the second slaughter robot and the third slaughter robot and scans the slaughtered animal, and the work control module may be configured to provide each work command of the first slaughter robot to the third slaughter robot based on images provided from the first scan unit to the third scan unit.

In one embodiment of the present invention, the work determination module may include a first work determination unit configured to determine whether to perform slaughtering using the first slaughter robot based on the image provided from the first scan unit, a second work determination unit configured to determine whether to perform slaughtering using the second slaughter robot based on the image provided from the second scan unit, and a third work determination unit configured to determine whether to perform slaughtering using the third slaughter robot based on the image provided from the third scan unit.

In one embodiment of the present invention, the work control module may extract an area of interest for a cutting or dismembering part of the slaughtered animal, and the area of interest is to extract a required cutting or dismembering part from feature points of one or more of ears, nose, crotch, and nipples, and the work control module may be configured to calculate a volume, a center of gravity, and a rotation amount of the area of interest, and the work control module transmits different work commands to the slaughter robot module according to the volume, the center of gravity, and the rotation amount of the area of interest.

In one embodiment of the present invention, the work determination module may be configured not to perform a cutting or dismembering work for the slaughtered animal using the slaughter robot module when the image provided from the scanning module is within a pre-stored slaughter defect reference range of the slaughtered animal.

In one embodiment of the present invention, the automated slaughter robot system may further include a data management unit configured to store work history information of the scanning module and the slaughter robot module.

### [Advantageous Effects]

The effects of the above-described automated slaughter robot system according to the present invention are as follows.

According to the present invention, a work determination module is configured to determine in advance whether to perform cutting or dismembering work on a slaughtered animal using a slaughter robot based on an image provided through a scanning module. The work determination module determines, for example, the presence or absence of exumbilication, disability, or the like of the slaughtered animal in advance and prevents the occurrence of a bigger problem in a slaughtering process using a slaughter robot.

According to the present invention, a work control module calculates a volume, a center of gravity, rotation amount, and the like of the slaughtered animal and provides the corresponding work command to a slaughter robot module so that the dismembering or cutting work can be accurately performed on a work part. Accordingly, it is possible to increase the commercial value of a slaughtered product.

It should be understood that the effects of the present invention are not limited to the above-described effects and include all effects inferrable from the configuration of the invention described in the detailed description or claims of the present invention.

### [Description of Drawings]

FIG. 1 is a configuration diagram of an automated slaughter robot system according to one embodiment of the present invention.
FIG. 2 is a schematic exemplary view illustrating an automated slaughter robot system according to one embodiment of the present invention.
FIG. 3 is an image illustrating a rotation amount of a slaughtered animal according to one embodiment of the present invention.
FIG. 4 is an exemplary view illustrating the rotation amount of the slaughtered animal according to one embodiment of the present invention.
FIG. 5 is an exemplary view illustrating a dismembered point of an area of interest of an abdominal part of the slaughtered animal according to one embodiment of the present invention.
FIG. 6 is a flowchart illustrating an operation process of the automated slaughter robot system according to one embodiment of the present invention.

### [Modes of the Invention]

Hereinafter, the present invention will be described with reference to the accompanying drawings. However, the present invention may be implemented in various different forms and is not limited to embodiments described herein. In addition, to clearly describe the present invention in the drawings, components irrelevant to the description have been omitted, and throughout the specification, similar parts have been denoted as similar reference numerals.

Throughout the specification, when a certain part is described as being "connected to" another part, it includes not only a case in which the certain part is "directly connected" to the other part, but also a case in which the certain part is "indirectly connected" to another part with an member interposed therebetween. In addition, when a certain part is described as "including" a certain component, this means that the certain part may further include another component rather than precluding the other component unless especially stated otherwise.

In the present invention, "above" and "under" mean being positioned above or under a target member, but do not necessarily mean being positioned above or under in the direction of gravity.

Hereinafter, embodiments of the present invention will be described in detail with reference to the accompanying drawings.

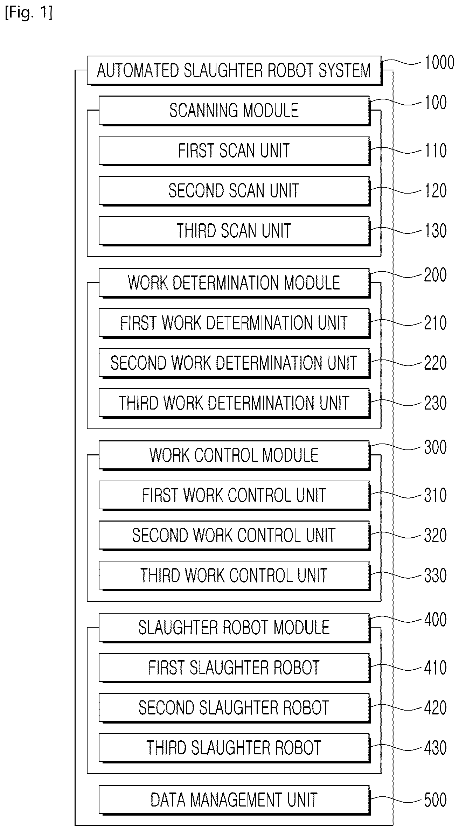

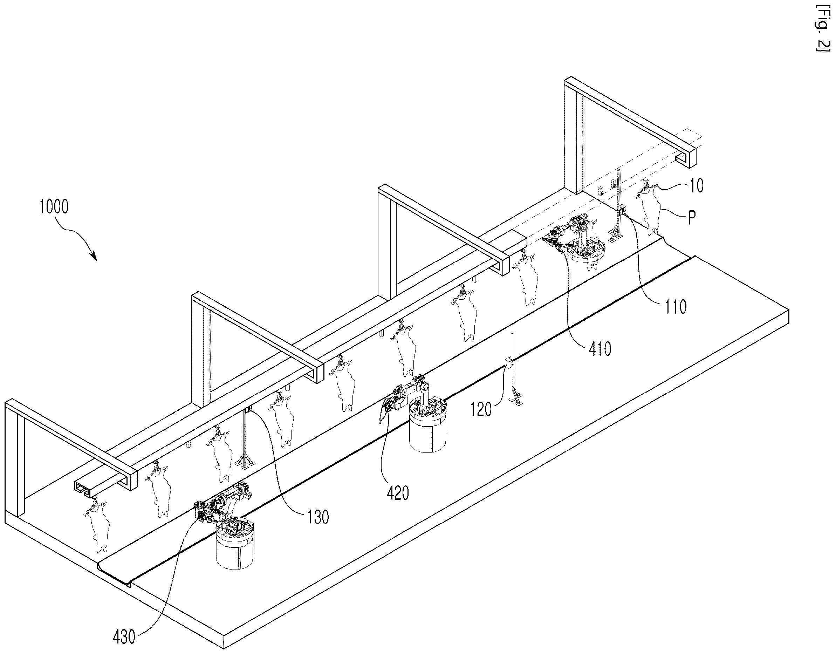

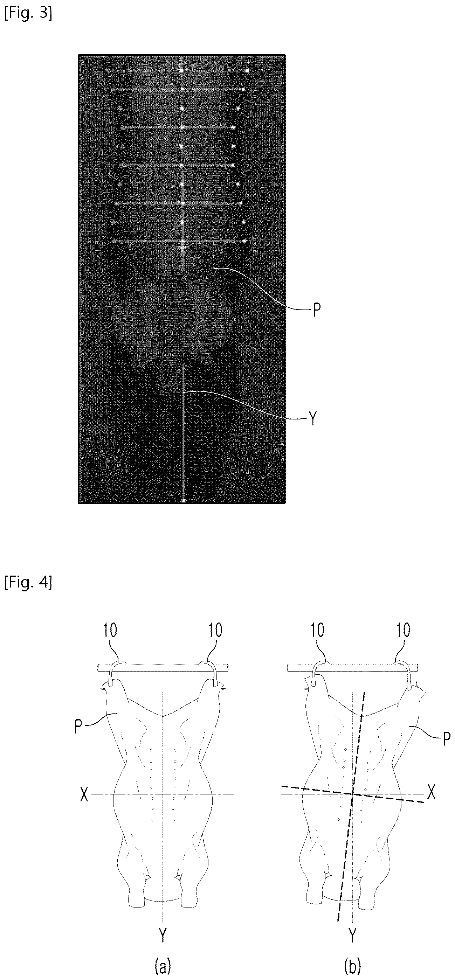

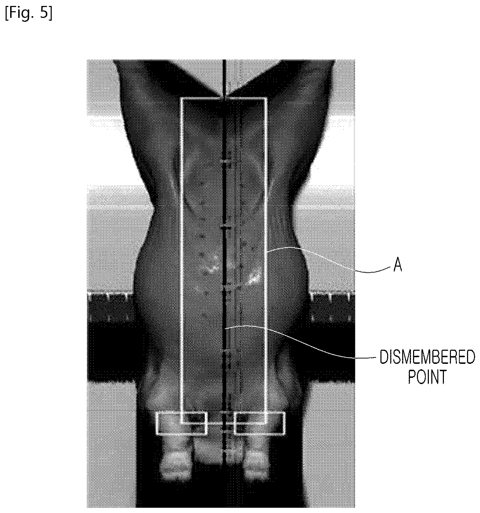

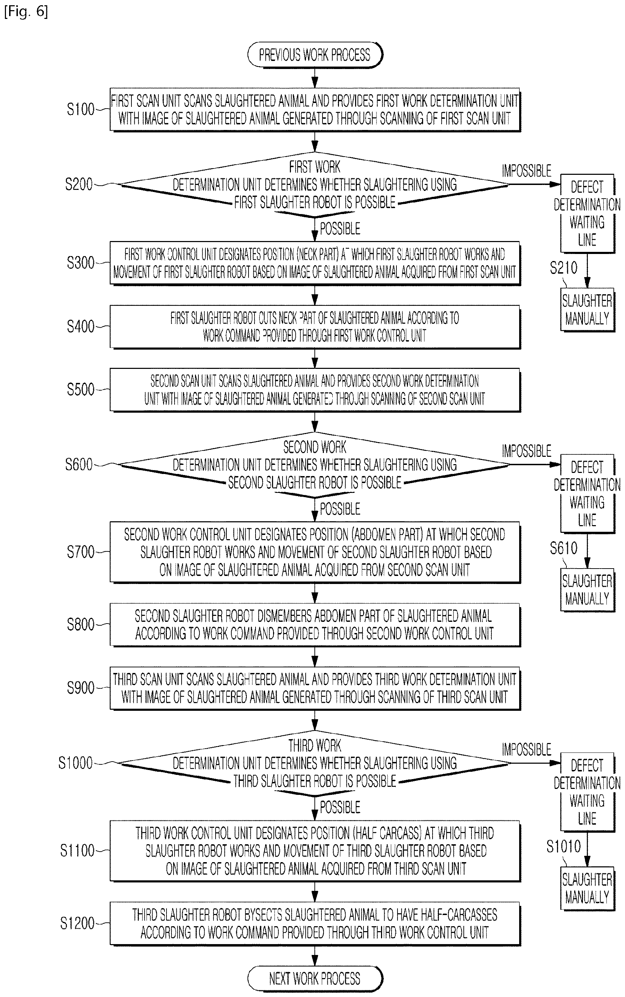

FIG. 1 is a configuration diagram of an automated slaughter robot system according to one embodiment of the present invention, FIG. 2 is a schematic exemplary view illustrating an automated slaughter robot system according to one embodiment of the present invention, FIG. 3 is an image illustrating a rotation amount of a slaughtered animal according to one embodiment of the present invention, FIG. 4 is an exemplary view illustrating the rotation amount of the slaughtered animal according to one embodiment of the present invention, FIG. 5 is an exemplary view illustrating a dismembered point of an area of interest of an abdominal area of the slaughtered animal according to one embodiment of the present invention, and FIG. 6 is a flowchart illustrating an operation process of the automated slaughter robot system according to one embodiment of the present invention.

As illustrated in FIGS. 1 to 6, an automated slaughter robot system 1000 may include a scanning module 100, a work determination module 200, a work control module 300, and a slaughter robot module 400.

The scanning module 100 is configured to scan a slaughtered animal P moving while hanging on a hanger 10. Here, a moving device is not limited to a specific form, such as a conveyor or a moving roller, and various forms of moving devices may be used as long as the slaughtered animal P hanging on the hanger 10 may be controlled at a required speed.

In addition, an example in which the slaughtered animal P slaughtered using the automated slaughter robot system 1000 according to the present invention is a pig will be described. Here, the animal slaughtered by the automated slaughter robot system 1000 is not necessarily limited to pigs, and various slaughtered animals P such as cows and chickens may be slaughtered. In addition, the slaughtered animal P moving while hanging on the hanger 10 may be, for example, the slaughtered animal P on which suffocation, bleeding, depilation, and washing are all performed completely.

Meanwhile, the scanning module 100 may include a first scan unit 110, a second scan unit 120, and a third scan unit 130. The scanning module 100 scans the slaughtered animal P moving along the moving device and acquire scan data of the corresponding slaughtered animal P.

In this way, the scan data acquired through the scanning module 100 may be generated as a three-dimensional (3D) image of the slaughtered animal P through an image conversion operation. Here, the image conversion operation may generate the image of the slaughtered animal P in various methods, such as providing the corresponding image information to the work determination module 200 and the work control module 300, generating the 3D image of the corresponding slaughtered animal P from the scan data provided from the scanning module 100 by the work determination module 200 and the work control module 300, etc., after the processing of the scanning module 100.

The scanning module 100 may be provided as, for example, a twodimensional (2D) light detection and ranging (LiDAR). In this case, the scanning module 100 may be provided as a 3D scanner, but since the 3D scanner collects data of the slaughtered animal P as radial data, for example, a part covered by the abdomen of the slaughtered animal P cannot be recognized.

Accordingly, the scanning module 100 according to the present invention may be preferably provided as a 2D scanner, and scan data acquired through the 2D scanner may be converted into a 3D image through an image conversion unit (not illustrated). When the scanning module 100 is provided as the 2D LiDAR among various 2D scanners, the scanning module 100 may precisely draw the slaughtered animal P and thus more clearly find feature points of the slaughtered animal P, and the work control module 300 can accurately obtain a volume, center of gravity, rotation amount, and the like of the slaughtered animal P. Here, the feature points of the slaughtered animal P may be, for example, ears, nose, crotch, nipples, and the like of the slaughtered animal P.

The first scan unit 110 to the third scan unit 130 may be formed with the same configuration with only a difference in installation positions.

Here, the first scan unit 110 may be disposed in front of a first slaughter robot 410 for cutting the neck part of the slaughtered animal P. The first scan unit 110 scans the slaughtered animal P before the neck part is cut and then provides an image generated from the corresponding scan data to a first work determination unit 210 and a first work control unit 310.

Here, the work determination module 200 for determining whether to cut or dismember the slaughtered animal P based on the image provided from the scanning module 100 may include the first work determination unit 210, a second work determination unit 220, and a third work determination unit 230. For example, the first work determination unit 210 determines whether to cut the corresponding slaughtered animal P using the first slaughter robot 410 based on an image provided from the first scan unit 110. In addition, the second work determination unit 220 determines whether to cut the corresponding slaughtered animal P using a second slaughter robot 420 based on an image provided from the second scan unit 120. In addition, the third work determination unit 230 determines whether to cut the corresponding slaughtered animal P using a third slaughter robot 430 based on an image provided from the third scan unit 130.

In this way, the work determination module 200 determines whether to perform slaughtering so that the slaughtering is performed only on the slaughtered animal P that can be cut or dismembered into a required form rather than cutting or dismembering all the slaughtered animals P moving along the moving device like the conventional slaughtering.

Pre-stored slaughter defect criteria may be stored in the work determination module 200. The slaughter defect criteria may be, for example, the presence or absence of exumbilication, disability, or the like of the slaughtered animal P, and when the image provided by the first scan unit 110 is compared with the slaughter defect criteria and the image provided by the first scan unit 110 corresponds to the slaughter defect criteria, the first work determination unit 210 does not proceed with the slaughtering of the corresponding slaughtered animal P through the first slaughter robot 410 and guides the slaughtered animal P to a defect determination waiting line.

In addition, as an example, when the rotation amount of the slaughtered animal P hanging on the hanger 10 is a predetermined rotation amount or more, the work determination module 200 determines that the slaughtered animal P is defective and guides the corresponding slaughtered animal P to the defect determination waiting line. Alternatively, the work determination module 200 guides the corresponding slaughtered animal P to the defect determination waiting line even when the volume of the slaughtered animal P hanging on the hanger 10 is excessively great.

In this case, for example, the worker may directly perform slaughtering on the slaughtered animal P, which may cause a bigger problem when the slaughtering is performed through the slaughter robot module 400 due to the presence or absence of exumbilication, disability, or the like among the slaughtered animals P determined that there are slaughter work defects through the work determination module 200, using a hand tool. In this case, the commercial value of the slaughtered product can be further increased through manual work.

In addition, when the work determination module 200 determines that there is no defective slaughter, the corresponding slaughtered animal P is cut or dismembered into the required shape through the slaughter robot module 400.

The slaughter robot module 400 for cutting or dismembering the slaughtered animal P may include the first slaughter robot 410, the second slaughter robot 420, and the third slaughter robot 430. Here, the first slaughter robot 410 may be configured to cut the neck part of the slaughtered animal P, the second slaughter robot 420 may be configured to dismember the abdominal part of the slaughtered animal P, and the third slaughter robot 430 may be configured to bisect the slaughtered animal P from the neck part to the tail of the slaughtered animal P to have two half-carcasses.

End portions of the first slaughter robot 410 to the third slaughter robot 430 have hand tools for cutting or dismembering the slaughtered animal P. The hand tools are detachably attached to the slaughter robot. Accordingly, when the hand tool needs to be replaced, the worker can easily replace the hand tool.

It is apparent that the slaughter robot module 400 is not necessarily limited to the first slaughter robot 410 to the third slaughter robot 430 and may have various numbers of robots and various working methods. For example, it is apparent that the positions of the first slaughter robot 410 and the second slaughter robot 420 having different working parts of the slaughtered animal P may be changed.

The automated slaughter robot system 1000 according to the present invention will be described as an example in which the scanning module 100 includes the first scan unit 110 to the third scan unit 130, the work determination module 200 includes the first work determination unit 210 to the third work determination unit 230, the work control module 300 includes the first work control unit 310 to the third work control unit 330, and the slaughter robot module 400 includes the first slaughter robot 410 to the third slaughter robot 430.

Meanwhile, the neck part of the slaughtered animal P determined that there are no slaughter defects through the first work determination unit 210 is cut by the first slaughter robot 410.

Here, the first slaughter robot 410 cuts the neck part of the slaughtered animal P according to an operation command transmitted from the first work control unit 310. The first work control unit 310 provides an optimized neck part cutting command for the slaughtered animal P suitable for the corresponding slaughtered animal P based on the image information of the slaughtered animal P provided from the first scan unit 110.

Specifically, the first work control unit 310 extracts an area of interest for cutting of the required neck part based on the image of the slaughtered animal P acquired through the first scan unit 110. In this case, the area of interest extracted by the first work control unit 310 to cut the neck part may be extracted through feature points of the slaughtered animal P. Here, the feature points of the slaughtered animal P extract required cutting parts through body feature points of the slaughtered animal P, such as the ears, nose, crotch, nipples, etc.

Such extraction of the feature points of the slaughtered animal P may be used to find cutting positions of the slaughtered animal P, but the rotation amount of the slaughtered animal P may be identified through the feature points of the slaughtered animal P. For example, referring to FIG. 3, the work control module 300 may set a virtual reference value Y for a vertical axis direction of the slaughtered animal P through various feature points of the slaughtered animal P, then compare each of a distance to a left side and a distance to a right side of a body based on the reference value, and determine how much the slaughtered animal P rotates to the left or right. As illustrated in FIG. 4, in the case of the rotation amount of the slaughtered animal P, the rotation amounts to the left and right may be calculated through the vertical axis reference value Y, and the rotation amount to the top and bottom may be calculated through a horizontal axis reference value X.

In this way, the first work control unit 310 sets a virtual reference value for the corresponding slaughtered animal P guided to the first slaughter robot 410, comprehensively calculates the volume, rotation amount, center of gravity, and the like of the area of interest based on the set reference value, and transmits the corresponding work command to the first slaughter robot 410 to cut the optimal neck part. That is, the first work control unit 310 controls the operation of the first slaughter robot 410 to cut the required neck part comprehensively considering the volume, rotation amount, center of gravity, and the like of the slaughtered animal P. For example, when cutting the neck part of the slaughtered animal P having all the same conditions excluding the rotation amount in the vertical direction, the first work control unit 310 performs slaughtering by providing different work commands to the first slaughter robot 410. That is, when slaughtering two slaughtered animals P, the first work control unit 310 may control the operation of the first slaughter robot 410 so that slaughtering is performed at different cutting angles. In this way, the first work control unit 310 controls the operation of the first slaughter robot 410 so that the optimal cutting work may be performed based on the image acquired through the first scan unit 110. In this case, the first slaughter robot 410 may cut the neck part according to a moving speed of the slaughtered animal P hanging on the hanger 10 so that the corresponding slaughtering may be performed continuously without stopping.

In this way, the slaughtered animal P of which neck part is cut by the first slaughter robot 410 moves to the second scan unit 120 provided between the first slaughter robot 410 and the second slaughter robot 420. Here, the first slaughter robot 410 and the second slaughter robot 420 may perform their work in a state in which their positions are switched as described above. That is, when the slaughtered animal P is slaughtered through the slaughter robot module 400, the abdominal part of the slaughtered animal P may be cut, and then the neck part of the slaughtered animal P may be cut. In this way, it is apparent that the positions of the first slaughter robot 410 and the second slaughter robot 420 may be switched. In the present invention, for convenience of description, an example in which slaughtering is performed in the order of the first slaughter robot 410, the second slaughter robot 420, and the third slaughter robot 430 will be described.

In addition, the second scan unit 120 scans the corresponding slaughtered animal P that enters the second scan unit 120 after the slaughtering is performed by the first slaughter robot 410. In this way, the image generated through the second scan unit 120 is provided to the second work determination unit 220 and the second work control unit 320.

Here, the second work determination unit 220 determines whether to cut the corresponding slaughtered animal P using the second slaughter robot 420 based on the image provided from the second scan unit 120. The second work determination unit 220 compares the image provided through the second scan unit 120 with the slaughter defect criteria, and when the image provided from the second scan unit 120 satisfies the slaughter defect criteria, the second work determination unit 220 does not slaughter the corresponding slaughtered animal P through the second slaughter robot 420 and guides the slaughtered animal P to the defect determination waiting line. Since the second work determination unit 220 is a component corresponding to the first work determination unit 210, detailed description thereof will be omitted.

In addition, the second work control unit 320 extracts an area of interest A for dismembering the required abdominal part as illustrated in FIG. 5 based on the image of the slaughtered animal P generated through the second scan unit 120. Since the extraction of the area of interest A has been described above, detailed description thereof will be omitted.

In addition, the second work control unit 320 calculates a volume, center of gravity, rotation amount, and the like of the area of interest and provides the work command for the second slaughter robot 420 to the second slaughter robot 420. In this way, since the abdominal part is cut according to a current state of the slaughtered animal P, the second work control unit 320 provides the second slaughter robot 420 with an optimized abdominal part dismembering command for the slaughtered animal P suitable for the slaughtered animal P.

In addition, the second slaughter robot 420 is disposed adjacent to the first slaughter robot 410 and cuts the abdominal part of the slaughtered animal P according to the work command provided from the second work control unit 320. In this case, the second slaughter robot 420 may cut the abdominal part according to the moving speed of the slaughtered animal P hanging on the hanger 10 so that the corresponding slaughtering may be performed continuously without stopping.

In this way, the slaughtered animal P of which abdominal part is cut by the second slaughter robot 420 moves to the third scan unit 130 provided between the second slaughter robot 420 and the third slaughter robot 430.

In addition, the third scan unit 130 scans the corresponding slaughtered animal P that enters the third scan unit 130 after the slaughtering is performed by the second slaughter robot 420. In this way, the image generated through the third scan unit 130 is provided to the third work determination unit 230 and the third work control unit 330.

Here, the third work determination unit 230 determines whether to cut the corresponding slaughtered animal P using the third slaughter robot 430 based on the image provided from the third scan unit 130. The third work determination unit 230 compares the image provided through the third scan unit 130 with the slaughter defect criteria, and when the image provided from the third scan unit 130 satisfies the slaughter defect criteria, the third work determination unit 230 does not slaughter the corresponding slaughtered animal P through the third slaughter robot 430 and guides the slaughtered animal P to the defect determination waiting line.

In addition, the third work control unit 330 extracts the area of interest for a process of bisecting a carcass based on the image of the slaughtered animal P generated through the third scan unit 130.

In addition, the third work control unit 330 calculates the volume, center of gravity, rotation amount, and the like of the area of interest and provides the third slaughter robot 430 with the work command in which the work needs to be finally performed in the third slaughter robot 430. In this way, when the process of bisecting a carcass is performed on the slaughtered animal P, the third work control unit 330 provides the third slaughter robot 430 with an optimized cutting command for the slaughtered animal P suitable for the slaughtered animal P.

In addition, the third slaughter robot 430 is disposed adjacent to the second slaughter robot 420 and bisects the slaughtered animal P from the neck part to the tail of the slaughtered animal P according to the work command provided from the third work control unit 330. In this case, the third slaughter robot 430 performs a process of bisecting a carcass according to the moving speed of the slaughtered animal P hanging on the hanger 10 so that the corresponding slaughtering may be performed continuously without stopping.

The automated slaughter robot system 1000 is not a method of cutting the neck part and the abdominal part of the slaughtered animal P and performing a process of bisecting a carcass for the slaughtered animal P once based on the image acquired through one-time scanning like the conventional system. When the slaughtering is performed using the slaughter robot in such a manner, the optimal cutting or dismembering work required by the worker cannot be performed.

Accordingly, when the automated slaughter robot system 1000 according to the present invention cuts the neck part and the abdominal part of the slaughtered animal P and performs a process of bisecting a carcass step by step, the automated slaughter robot system 1000 may scan the slaughtered animal P by each step and provide each slaughter robot with the work command for optimal cutting or dismembering according to the corresponding scanning to perform the optimal cutting or dismembering required by the worker.

That is, the center of gravity, rotation amount, and the like of the slaughtered animal P may be changed during the step-by-step slaughtering operation. Accordingly, the automated slaughter robot system 1000 is configured to perform scanning before slaughtering is performed on each part and reset the area of interest accordingly to perform the optimal cutting or dismembering required by the worker.

Meanwhile, the automated slaughter robot system 1000 may further include a data management unit 500.

The data management unit 500 may store various types of information including work histories of the slaughtered animal P. For example, the data management unit 500 may store various types of information such as information acquired from the scanning module 100, work histories of the slaughter robot module 400, the date of birth, place of birth, gender, number of individuals, and grade of the slaughtered animal P, etc.

Through the data management unit 500, purchasers may check how the slaughtered animal P is distributed and how the work process is performed.

Schematically describing the operation process of the automated slaughter robot system 1000 through FIG. 6, first, the first scan unit 110 scans the slaughtered animal P and provides the first work determination unit 210 with the image of the slaughtered animal P generated through the scanning of the first scan unit 110 (S100).

Next, the first work determination unit 210 determines whether slaughtering using the first slaughter robot 410 is possible (S200).

When the first work determination unit 210 determines that the work using the first slaughter robot 410 is possible, the corresponding slaughtered animal P is cut or dismembered by the first slaughter robot 410. In contrast, when the first work determination unit 210 determines that the work using the first slaughter robot 410 is impossible, the corresponding slaughtered animal P is slaughtered manually by a worker (S210).

Next, the first work control unit 310 designates a position (neck part) at which the first slaughter robot 410 works and the movement of the first slaughter robot 410 based on the image of the slaughtered animal P acquired from the first scan unit 110 (S300).

Next, the first slaughter robot 410 cuts the neck part of the slaughtered animal P according to the work command provided through the first work control unit 310 (S400).

Next, the second scan unit 120 scans the slaughtered animal P and provides the second work determination unit 220 with the image of the slaughtered animal P generated through the scanning of the second scan unit 120 (S500).

Next, the second work determination unit 220 determines whether slaughtering using the second slaughter robot 420 is possible (S600).

When the second work determination unit 220 determines that the work using the second slaughter robot 420 is possible, the corresponding slaughtered animal P is cut or dismembered by the second slaughter robot 420. In contrast, when the second work determination unit 220 determines that the work using the second slaughter robot 420 is impossible, the corresponding slaughtered animal P is slaughtered manually by a worker (S610).

Next, the second work control unit 320 designates a position (neck part) at which the second slaughter robot 420 works and the movement of the second slaughter robot 420 based on the image of the slaughtered animal P acquired from the second scan unit 120 (S700).

Next, the second slaughter robot 420 cuts the abdominal part of the slaughtered animal P according to the work command provided through the second work control unit 320 (S800).

Next, the third scan unit 130 scans the slaughtered animal P and provides the third work determination unit 230 with the image of the slaughtered animal P generated through the scanning of the third scan unit 130 (S900).

Next, the third work determination unit 230 determines whether slaughtering using the third slaughter robot 430 is possible (S1000).

When the third work determination unit 230 determines that the work using the third slaughter robot 430 is possible, the corresponding slaughtered animal P is cut or dismembered by the third slaughter robot 430. In contrast, when the third work determination unit 230 determines that the work using the third slaughter robot 430 is impossible, the corresponding slaughtered animal P is slaughtered manually by a worker (S1010).

Next, the third work control unit 330 designates a position (half carcass) at which the third slaughter robot 430 works and the movement of the third slaughter robot 430 based on the image of the slaughtered animal P acquired from the third scan unit 130 (S1100).

Lastly, the third slaughter robot 430 performs a process of bisecting a carcass on the slaughtered animal P according to the work command provided through the third work control unit 330 (S1200).

The effects of the above-described automated slaughter robot system according to the present invention are as follows.

According to the present invention, a work determination module is configured to determine in advance whether to perform cutting or dismembering work on a slaughtered animal using a slaughter robot based on an image provided through a scanning module. The work determination module determines, for example, the presence or absence of exumbilication, disability, or the like of the slaughtered animal in advance and prevents the occurrence of a bigger problem in a slaughtering process using a slaughter robot.

According to the present invention, a work control module calculates a volume, a center of gravity, rotation amount, and the like of the slaughtered animal and provides the corresponding work command to a slaughter robot module so that the dismembering or cutting work can be accurately performed on a work part. Accordingly, it is possible to increase the commercial value of a slaughtered product.

It should be understood that the effects of the present invention are not limited to the above-described effects and include all effects inferrable from the configuration of the invention described in the detailed description or claims of the present invention.

However, this is only an exemplary embodiment of the present invention, and the scope of the present invention is not limited by the description scope of this embodiment.

The above description of the present invention is for illustrative purpose, and those skilled in the art to which the present invention pertains will be able to understand that the present invention may be easily modified in other specific forms without changing the technical spirit or essential features thereof. Therefore, it should be understood that the above-described embodiments are illustrative and not restrictive in all respects. For example, each component described in a singular form may be implemented separately, and likewise, components described as being implemented separately may also be implemented in a combined form.

The scope of the present invention is defined by the appended claims, and all changes or modifications derived from the meaning and scope of the claims and equivalent concepts thereof should be construed as being included in the scope of the present invention.

### [Description of Reference Numerals]

100: scanning module
110: first scan unit
120: second scan unit
130: third scan unit
200: work determination module
210: first work determination unit
220: second work determination unit
230: third work determination unit
300: work control module
310: first work control unit
320: second work control unit
330: third work control unit
400: slaughter robot module
410: first slaughter robot
420: second slaughter robot
430: third slaughter robot
500: data management unit
1000: automated slaughter robot system

## Claims

1. An automated slaughter robot system comprising:
a scanning module configured to scan a slaughtered animal moving while hanging on a hanger;
a work determination module configured to determine whether to cut or dismember the slaughtered animal based on an image provided from the scanning module;
a work control module configured to extract a required cutting or dismembering part of the slaughtered animal from the image acquired through the scanning module; and
a slaughter robot module configured to cut or dismember the slaughtered animal according to a work command provided from the work control module.

2. The automated slaughter robot system of claim 1, wherein the slaughter robot module includes:
a first slaughter robot configured to cut a neck part of the slaughtered animal;
a second slaughter robot that is disposed adjacent to the first slaughter robot and dismembers an abdomen part of the slaughtered animal; and
a third slaughter robot that is disposed adjacent to the second slaughter robot and bisects the slaughtered animal from the neck part to a tail of the slaughtered animal, and
the first slaughter robot to the third slaughter robot cut or dismember the slaughtered animal according to a moving speed of the slaughtered animal moving while hanging on the hanger.

3. The automated slaughter robot system of claim 2, wherein the scanning module includes:
a first scan unit that is disposed in front of the first slaughter robot and scans the slaughtered animal;
a second scan unit that is disposed between the first slaughter robot and the second slaughter robot and scans the slaughtered animal; and
a third scan unit that is disposed between the second slaughter robot and the third slaughter robot and scans the slaughtered animal, and
the work control module is configured to provide each work command of the first slaughter robot to the third slaughter robot based on images provided from the first scan unit to the third scan unit.

4. The automated slaughter robot system of claim 3, wherein the work determination module includes:
a first work determination unit configured to determine whether to perform slaughtering using the first slaughter robot based on the image provided from the first scan unit;
a second work determination unit configured to determine whether to perform slaughtering using the second slaughter robot based on the image provided from the second scan unit; and
a third work determination unit configured to determine whether to perform slaughtering using the third slaughter robot based on the image provided from the third scan unit.

5. The automated slaughter robot system of claim 1, wherein the work control module extracts an area of interest for a cutting or dismembering part of the slaughtered animal, wherein the area of interest is to extract a required cutting or dismembering part from feature points of one or more of ears, nose, crotch, and nipples, and
the work control module is configured to calculate a volume, a center of gravity, and a rotation amount of the area of interest, and the work control module transmits different work commands to the slaughter robot module according to the volume, the center of gravity, and the rotation amount of the area of interest.

6. The automated slaughter robot system of claim 1, wherein the work determination module is configured not to perform a cutting or dismembering work for the slaughtered animal using the slaughter robot module when the image provided from the scanning module is within a pre-stored slaughter defect reference range of the slaughtered animal.

7. The automated slaughter robot system of claim 1, further comprising a data management unit configured to store work history information of the scanning module and the slaughter robot module.
